# EUROPÄISCHE PATENTSCHRIFT

(11) **EP 2 422 974 B1**
(45) Veröffentlichungstag und Bekanntmachung des Hinweises auf die Patenterteilung: **08.05.2013**
(21) Anmeldenummer: 11178651.3
(22) Anmeldetag: 24.08.2011
(51) Int. Cl.: B32B 1/08, F16L 9/17

(54) **Mehrschichtiges Kunststoffrohr**
Multi-layer plastic pipe
Tuyau en plastique multicouche

(30) Priorität: 26.08.2010 DE 202010011834 U
(43) Veröffentlichungstag der Anmeldung: 29.02.2012
(73) Patentinhaber: Uponor Innovation AB, 73061 Virsbo (SE)
(72) Erfinder: Juuti, Rauno, 15550 Lahti (FI); Ånäs, Tommy, 00500 HELSINKI (FI); Mero, Hannes, 15140 LAHTI (FI); Helppolainen, Jouni, 15160 LAHTI (FI)
(74) Vertreter: Epping - Hermann - Fischer

(56) Entgegenhaltungen:
- EP-A1- 1 378 656
- EP-A2- 1 997 617
- WO-A1-2008/001870
- WO-A2-2009/090654
- US-A1- 2007 074 776

## Beschreibung

Die Erfindung betrifft ein mehrschichtiges Kunststoffrohr.

Für unterirdisch verlegte Rohre, zum Beispiel Abwasserrohre oder Drainagen, werden häufig mehrschichtige Kunststoffrohre verwendet. Aus wirtschaftlichen und ökologischen Gesichtspunkten sind eine dauerhafte hohe mechanische Stabilität des Rohrs ebenso wichtig wie ein geringer, kostengünstiger Materialeinsatz.

Eine zu lösende Aufgabe besteht darin, ein mehrschichtiges Kunststoffrohr mit verbesserten Eigenschaften anzugeben.

Diese Aufgabe wird mit dem mehrschichtigen Kunststoffrohr nach zumindest einer Ausführungsform der Erfindung gelöst.

Es wird ein mehrschichtiges Kunststoffrohr angegeben umfassend:
- eine innere Schicht, die ein Polyolefin umfasst oder daraus besteht,
- eine mittlere Schicht angeordnet auf der inneren Schicht, und
- eine äußere Schicht, die auf der mittleren Schicht angeordnet ist und ein Polyolefin umfasst oder daraus besteht.
Die mittlere Schicht kann 76 bis 85 Gew-% eines Polyolefins sowie 15 bis 24 Gew-% eines mineralischen Füllstoffs umfassen oder daraus bestehen (Gew-% = Gewichtsprozent). Die mittlere Schicht ist derart aufgeschäumt, dass die Dichte der mittleren Schicht um 10 bis 70% gegenüber einer nicht aufgeschäumten mittleren Schicht reduziert ist. Das mehrschichtige Kunststoffrohr wird im Folgenden auch als das "Kunststoffrohr" und der mineralische Füllstoff als "Füllstoff" bezeichnet.

Der Füllstoff ist aus Talkum, Kreide, Glasfaser und/oder einer Kombination dieser Materialien ausgewählt. Der Füllstoff ist insbesondere geeignet, um die mechanischen Eigenschaften des Kunststoffrohrs zu verbessern. Die genannten Füllstoffe sind günstiger und haben insbesondere eine geringere Dichte als Wollastonit. Es wurde jedoch überraschend gefunden, dass diese Füllstoffe dem Kunststoffrohr vergleichbare oder sogar verbesserte mechanische Eigenschaften verleihen können. Insbesondere kann die Steifigkeit bei Rohren mit größeren Durchmessern verbessert werden, wodurch diese stärker belastbar sind. Es werden daher anmeldungsgemäß diese Füllstoffe für das Kunststoffrohrs verwendet.

Das Polyolefin (Polyalken) der inneren Schicht, der mittleren Schicht und der äußeren Schicht ist jeweils unabhängig voneinander ausgewählt aus: Polyethylen (Polyethen, PE), Polypropylen (Polypropen, PP), Copolymere dieser Materialien und einer Kombination dieser Materialien. Die angegebenen Kunststoffe stehen jeweils für die gesamte Kunststofffamilie. Beispielsweise repräsentiert Polyethylen auch Polyethylene unterschiedlicher Dichte (HDPE, MDPE, LDPE) oder quervernetztes Polyethylen (PEX). Selbiges gilt auch für Polypropylen. Polyvinylchlorid (PVC) wird in dieser Anmeldung nicht zu den Polyolefinen gezählt, da es stark abweichende Eigenschaften wie zum Beispiel eine hohe Dichte aufweist und aufgrund des hohen Chlorgehaltes bedenklich ist.

Ein solches Kunststoffrohr kann beispielsweise als Abwasserrohr oder zur Drainage verwendet werden. Anmeldungsgemäß sind die Maße des Kunststoffrohrs nicht begrenzt, beispielsweise kann das Kunststoffrohr eine Nennweite zwischen DN 50 und DN 2000, insbesondere DN 100 und DN 1000, aufweisen. Die Wandstärke kann sich nach dem Durchmesser richten. So kann beispielsweise ein Kunststoffrohr mit einem Innendurchmesser von 300 mm (DN 300) eine Wandstärke für die innere Schicht beziehungsweise äußere Schicht von 1 bis 5 mm, insbesondere 0,5 bis 3 mm aufweisen. Die mittlere Schicht weist dabei eine Wandstärke von 5 bis 20 mm, insbesondere 6 bis 12 mm auf. Oftmals liegt die die Dicke der inneren und der äußeren Schicht jeweils im Bereich von 7 bis 15 % der gesamten Wandstärke, also beispielsweise bei 10 %. Eine größere Dicke verbessert die mechanische Stabilität des Rohres. Durch die überraschend gefundene höhere Steifigkeit können größere Rohrdurchmesser bei gleicher Wandstärke oder kleinere Wandstärken hergestellt werden.

In einem anderen Bespiel mit dem Innendurchmesser 315 mm kann die gesamte Wandstärke 9 mm betragen, wobei die Dicke der inneren und der äußeren Schicht je ca. 1 mm beträgt. Die Dicke der mittleren Schicht kann ca. 7 mm betragen.

Zwischen den jeweiligen Schichten können zum Beispiel Haftschichten angeordnet sein. In der Regel ist die äußere Schicht jedoch unmittelbar auf der mittleren Schicht und diese ist wiederum unmittelbar auf der inneren Schicht angeordnet. Das Kunststoffrohr ist nach zumindest einer Ausführungsform der Erfindung dreischichtig; es weist also keine weiteren Schichten auf. Das Kunststoffrohr kann eine angeformte Muffe umfassen, um es beispielsweise mit einem weiteren Kunststoffrohr zu verbinden.

Das anmeldungsgemäße Kunststoffrohr kann eine radiale Steifigkeit von ≥ 4 kN/m² und insbesondere von ≥ 8 kN/m² aufweisen und daher beispielsweise dafür geeignet sein, unterirdisch verlegt zu werden. Die radiale Rohrsteifigkeit des mehrschichtigen Kunststoffrohrs kann oft sogar ≥ 16 kN/m² sein, wodurch es besonders unempfindlich gegenüber mechanischer Beanspruchung wie beispielsweise Stöße oder Schläge ist. Hierdurch kann es beispielsweise direkt ohne einen speziell aufgebrachten puffernden Untergrund wie beispielsweise ein Sandbett, aus dem größere Partikel wie Steine entfernt wurden, verlegbar sein. Dadurch werden insbesondere die Kosten beim Verlegen des Kunststoffrohrs reduziert.

Die mechanischen Eigenschaften des Kunststoffrohrs können maßgeblich durch die Wahl und den Gehalt an mineralischen Füllstoff verbessert beziehungsweise nach Bedarf eingestellt werden. Beispielsweise können so die Schlagzähigkeit und/oder die Steifigkeit des Kunststoffrohrs verbessert werden, da durch den Füllstoff das Elastizitätsmodul der entsprechenden Schicht beziehungsweise des Kunststoffrohrs insgesamt erhöht wird. Anmeldungsgemäß wurde erkannt, dass ein zu hoher Füllstoffgehalt, beispielsweise ≥ 30 Gew-% in der mittleren Schicht, sich wiederum nachteilig auf das Gewicht des Kunststoffrohrs auswirkt. Anmeldungsgemäß wurde erkannt, dass auch bei einem Füllstoffgehalt von < 25 % bereits eine sehr hohe mechanische Stabilität und Steifigkeit erhalten wird.

Die Dichte der mittleren Schicht ist im Vergleich zu einer Schicht, die nicht aufgeschäumt wurde, reduziert. Hierdurch wird im Gegensatz zu einem herkömmlichen Rohr, das eine massive Schicht gleicher Stärke aufweist, das Gewicht gesenkt. Aufgrund der aufgeschäumten mittleren Schicht kann das Kunststoffrohr im Vergleich zu einem herkömmlichen einwandigen und/oder nicht teilweise aufgeschäumten Rohr eine gleich gute oder sogar verbesserte radiale Steifigkeit aufweisen. Somit können bei gleich bleibender oder verbesserter Qualität der Materialeinsatz und somit die Produktionskosten gesenkt werden. Durch die aufgeschäumte mittlere Schicht kann die innere Schicht beispielsweise vor Schlägen geschützt werden, da die mittlere Schicht als Puffer fungieren kann. Daher werden insbesondere Deformationen der äußeren Schicht nicht an die innere Schicht weitergegeben, wodurch diese unbeschädigt bleibt. Dadurch können insbesondere das Verlegen des Kunststoffrohrs oder sonstige Bauarbeiten in dessen Umfeld erleichtert werden. Das anmeldungsgemäße Kunststoffrohr weist insbesondere eine gute Formstabilität und (auch bei Benutzung) eine lange Haltbarkeit auf.

Gemäß einer weiteren Ausführungsform kann die mittlere Schicht des Kunststoffrohrs 77 bis 81 Gew-% Polyolefin und 19 bis 23 Gew-% Füllstoff umfassen oder daraus bestehen. In diesem Bereich wurden sehr gute Ergebnisse für das anmeldungsgemäße Kunststoffrohr erhalten. Es zeichnet sich vor allem durch eine hohe mechanische Stabilität und Steifigkeit bei einem vergleichbar niedrigen Gewicht aus. Diese Vorteile sind insbesondere bei einem hohen Innendurchmesser, zum Beispiel ≥ DN 300, wichtig, da ein zu hohes Eigengewicht des Kunststoffrohres dessen Stabilität nachteilig beeinflusst. Das heißt, dass bei einem zu hohen Eigengewicht das Kunststoffrohr leichter deformiert (im Extremfall sogar kollabieren) bzw. undicht werden kann. Da ein hoher Füllstoffgehalt, zum Beispiel > 25 Gew-% entfällt, werden nicht nur das Gewicht des Rohres, sondern auch die Produktionskosten gesenkt und das Herstellungsverfahren erleichtert, da das Kunststoffrohr mit diesem Füllstoffgehalt besonders leicht mittels Coextrusion hergestellt werden kann. Die thermischen Eigenschaften des Füllstoff sind insbesondere auch für den Herstellungsprozess von Nutzen und reduzieren beispielsweise die Kosten in der Herstellungs- und der Abkühlungsphase.

Die mittlere Schicht kann beispielsweise aus 79 Gew-% Polyolefin und 21 Gew-% Füllstoff bestehen. In diesem Verhältnis kann ein Kunststoffrohr mit hervorragenden mechanischen Eigenschaften erhalten werden, dass sich insbesondere durch die im vorstehenden Absatz genannten Vorteile auszeichnet.

Gemäß einer weiteren Ausführungsform ist der Füllstoff Talkum. Überraschend wurde festgestellt, dass sich mit Talkum, insbesondere in dem oben genannten Bereich für den Füllstoffgehalt, ein Kunststoffrohr mit außerordentlich hoher mechanischer Stabilität und Steifigkeit herstellen lässt. Das Kunststoffrohr zeigt zudem auch sehr gute Kriecheigenschaften. Diese Erkenntnis war insbesondere überraschend, da Talkum an sich mit einer Mohs-Härte von 1 ausgesprochen weich ist. Die Mohs-Härte von Talkum ist signifikant niedriger als zum Beispiel die von Kreide (3) oder Wollastonit (4,2).

Die niedrige Mohs-Härte von Talkum bringt den Vorteil mit sich, dass die Apparaturen und Geräte zur Herstellung des Kunststoffrohres im Vergleich zu anderen Füllstoffen kaum beansprucht und abgenutzt werden. Insbesondere Wollastonit verursacht durch seinen hohen Härtegrad einen signifikanten Verschleiß an den Apparaturen.

Ein weiterer Vorteil von Talkum gegenüber Wollastonit ist die vergleichbar geringe Dichte dieses Füllstoffs, so dass das Kunststoffrohr nur ein geringes Eigengewicht aufweist. Aus diesem Grund wird für das anmeldungsgemäße Kunststoffrohr auch kein Schwerspat (BaSO₄) verwendet. Während bei Kunststoffrohren mit geringem Durchmesser das Eigengewicht bzw. die Dichte kaum von Bedeutung sind, sind diese Eigenschaften bei Kunststoffrohren mit einem großen Innendurchmesser von ≥ DN 300, insbesondere bei DN ≥ 500, von großer Bedeutung. Neben der Kostenersparnis durch den geringeren Materialeinsatz wird in dem Kunststoffrohr mit Talkum als Füllstoff durch das niedrige Eigengewicht ein geringerer Druck auf die Statik des Rohres ausgeübt. Bei einem Füllstoff mit hoher Dichte muss das erhöhte Eigengewicht wiederum durch eine höhere Wandstärke kompensiert werden. Das heißt also, dass mit Vorteil ein Kunststoffrohr mit großem Durchmesser bei gleicher Stabilität und Steifigkeit mit einer etwas geringeren Wandstärke realisiert werden kann.

Wie oben bereits erwähnt, wurde überraschend gefunden, dass Talkum sowohl die Steifigkeit als auch die Kriecheigenschaften des Kunststoffrohres verbessert, was insbesondere gilt, wenn das Polyolefin Polypropylen ist. Hierin besteht neben der geringeren Härte ein weiterer Vorteil gegenüber Kreide als Füllstoff, da Kreide mitunter das Kriechverhalten negativ beeinträchtigen kann. Somit weist das anmeldungsgemäße Kunststoffrohr mit Talkum als Füllstoff eine längere Haltbarkeit auf als eines, das Kreide enthält. Das gilt insbesondere, wenn das Kunststoffrohr hohen Drücken ausgesetzt wird.

Gemäß einer weiteren Ausführungsform können die innere Schicht und/oder die äußere Schicht Polyolefin und einen Füllstoff umfassen oder daraus bestehen. Hierdurch wird beispielsweise die mechanische Stabilität, zum Beispiel die Formstabilität, des Kunststoffrohrs weiter verbessert. Insbesondere kann durch einen Füllstoff in der äußeren Schicht die Stabilität des Kunststoffrohrs verbessert werden.

Gemäß einer weiteren Ausführungsform ist das Polyolefin ein Polypropylen. Hierdurch wird insbesondere die Herstellung des Kunststoffrohrs vereinfacht, da die Schichten alle den gleichen Kunststoff enthalten. Des Weiteren kann eine Herstellung durch Coextrusion mit Polypropylen als Polyolefin gut durchgeführt werden.

Gemäß einer weiteren Ausführungsform ist die mittlere Schicht derart aufgeschäumt, dass die Dichte der mittleren Schicht um 10 bis 49% gegenüber einer nicht aufgeschäumten mittleren Schicht aus den gleichen Materialien reduziert ist. Bei einem dreischichtigen Kunststoffrohr kann insbesondere nur die mittlere Schicht geschäumt sein. Wenn die mittlere Schicht über 50 % aufgeschäumt ist, kann dies mitunter die mechanische Stabilität des Kunststoffrohres senken. Beispielsweise kann es bei hohen Krafteinwirkungen von außen leichter zu permanenten Deformationen der mittleren Schicht kommen.

Das Aufschäumen kann beispielsweise chemisch durchgeführt werden, indem in geringen Konzentrationen ein Triebmittel zugesetzt wird. Des Weiteren kann das Aufschäumen physikalisch erfolgen, in dem beim Extrudieren beispielsweise unter Druck ein Gas zugeführt wird. Prinzipiell kann auch eine Kombination von chemischen und physikalischen Methoden zum Aufschäumen verwendet werden. Geeignete Verfahren, um beim Coextrudieren die mittlere Schicht aufzuschäumen, sind beispielsweise in der EP 1 393 890 A1 und den dort genannten Referenzen beschrieben, deren Inhalt insofern hiermit durch Rückbezug aufgenommen wird.

Die Rückstände eines chemischen Triebmittels oder eines Gases, das zum Aufschäumen verwendet wurde, sind bei der Angabe der Zusammensetzung der mittleren Schicht beziehungsweise des Kunststoffrohrs nicht berücksichtigt. Diese Rückstände können in vernachlässigbar geringen Mengen vorhanden sein, obwohl sie prinzipiell nachweisbar bleiben können.

Nachfolgend wird die Erfindung anhand von Ausführungsbeispielen und einer Zeichnung näher erläutert. Dabei geben gleiche Bezugszeichen jeweils gleiche Elemente in der Figur an. Es sind jedoch keine maßstäblichen Bezüge dargestellt, vielmehr können einzelne Elemente zum besseren Verständnis vergrößert und/oder schematisch dargestellt sein.

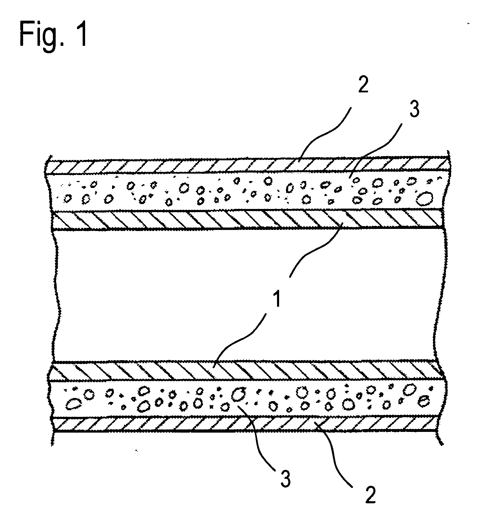

In Figur 1 ist ein Ausschnitt eines Längsschnitts durch das mehrschichtige Kunststoffrohr nach zumindest einer Ausführungsform der Erfindung gezeigt. Das Kunststoffrohr kann einen Innendurchmesser von beispielsweise 300 mm und eine radiale Steifigkeit von ≥ 8 kN/m² und oft sogar von ≥ 16 kN/m² aufweisen, sodass es beispielsweise als unterirdisch verlegbares Abwasserrohr oder als Drainage geeignet ist. Es kann insbesondere ohne ein spezielles Sandbett verlegt werden, ohne dass es dabei Schaden nimmt. Das Kunststoffrohr kann eine angeformte Muffe umfassen (nicht gezeigt).

Das Kunststoffrohr kann drei Schichten aufweisen, wobei die innere Schicht (1) und die äußere Schicht (2) jeweils Polypropylen aus bestehen. Prinzipiell können die innere Schicht (1) und/oder die äußere Schicht (2) auch einen mineralischen Füllstoff enthalten. Wie in Figur 1 gezeigt, sind die Schichten unmittelbar aufeinander angeordnet. Die mittlere Schicht (3) besteht zu 76 bis 85 Gew-% aus Polypropylen und zu 15 bis 24 Gew-% aus dem Füllstoff, zum Beispiel Talkum. Bei einem Gehalt von 19 bis 23 Gew-%, insbesondere bei ca. 21 Gew-%, Talkum werden die vorteilhaftesten Kombinationen aus sehr hoher Steifigkeit, mechanischer Stabilität und Kriechverhalten auf der einen Seite und geringem Eigengewicht, geringer Dichte und Materialeinsatz auf der anderen Seite erhalten. Die mittlere Schicht (3) ist derart aufgeschäumt, dass die Dichte im Vergleich zu einer nicht aufgeschäumten mittleren Schicht gleicher Zusammensetzung um 10 bis 70%, insbesondere 10 bis 49 %, reduziert ist. Das Kunststoffrohr weist eine somit hohe mechanische Stabilität auf. Es ist insbesondere formstabil, lange haltbar und kostengünstig beispielsweise durch Coextrusion herstellbar.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Schutzansprüchen beinhaltet, auch wenn dieses Merkmal oder diese Kombination selbst nicht explizit in den Schutzansprüchen oder in den Ausführungsbeispielen angegeben ist.

## Patentansprüche

1. Mehrschichtiges Kunststoffrohr umfassend:
- eine innere Schicht (1), die ein Polyolefin umfasst,
- eine mittlere Schicht (3) angeordnet auf der inneren Schicht (1), und
- eine äußere Schicht (2), die auf der mittleren Schicht (3) angeordnet ist und ein Polyolefin umfasst;
wobei die mittlere Schicht (3) 76 bis 85 Gew-% eines Polyolefins sowie 15 bis 24 Gew-% eines mineralischen Füllstoffs umfasst und derart aufgeschäumt ist, dass die Dichte der mittleren Schicht (3) um 10 bis 70% gegenüber einer nicht aufgeschäumten mittleren Schicht reduziert ist;
wobei das Polyolefin jeweils ausgewählt ist aus Polyethylen, Polypropylen, Copolymere dieser Materialien und/oder einer Kombination dieser Materialien; und
wobei der Füllstoff ausgewählt ist aus Talkum, Kreide, Glasfaser und/oder einer Kombination dieser Materialien.

2. Kunststoffrohr nach dem vorstehenden Anspruch,
wobei die mittlere Schicht (3) 77 bis 81 Gew-% Polyolefin und 19 bis 23 Gew-% Füllstoff umfasst.

3. Kunststoffrohr nach dem vorstehenden Anspruch,
wobei die mittlere Schicht (3) 79 Gew-% Polyolefin und 21 Gew-% Füllstoff umfasst.

4. Kunststoffrohr nach einem der vorstehenden Ansprüche,
wobei die innere Schicht (1) und/oder die äußere Schicht (2) Polyolefin und einen Füllstoff umfassen.

5. Kunststoffrohr nach einem der vorstehenden Ansprüche,
wobei das Polyolefin ein Polypropylen ist.

6. Kunststoffrohr nach einem der vorstehenden Ansprüche,
wobei der Füllstoff aus Talkum besteht.

7. Kunststoffrohr nach einem der vorstehenden Ansprüche,
wobei die Dichte der mittleren Schicht (3) um 10 bis 49% gegenüber einer nicht aufgeschäumten mittleren Schicht (3) reduziert ist.

## Claims

1. Multilayer plastics pipe comprising:
- an inner layer (1) which comprises a polyolefin,
- a middle layer (3) arranged on the inner layer (1), and
- an outer layer (2) arranged on the middle layer (3) and comprising a polyolefin;
where the middle layer (3) comprises from 76 to 85% by weight of a polyolefin, and also from 15 to 24% by weight of a mineral filler and has been foamed in such a way that the density of the middle layer (3) has been reduced by from 10 to 70% in comparison with an unfoamed middle layer;
where the polyolefin is in each case one selected from polyethylene, polypropylene, copolymers of these materials and/or a combination of these materials; and where the filler is one selected from talc powder, chalk, glass fibre and/or a combination of these materials.

2. Plastics pipe according to the preceding claim,
where the middle layer (3) comprises from 77 to 81% by weight of polyolefin and from 19 to 23% by weight of filler.

3. Plastics pipe according to the preceding claim,
where the middle layer (3) comprises 79% by weight of polyolefin and 21% by weight of filler.

4. Plastics pipe according to any of the preceding claims,
where the inner layer (1) and/or the outer layer (2) comprise polyolefin and a filler.

5. Plastics pipe according to any of the preceding claims,
where the polyolefin is a polypropylene.

6. Plastics pipe according to any of the preceding claims, where the filler is composed of talc powder.

7. Plastics pipe according to any of the preceding claims, where the density of the middle layer (3) has been reduced by from 10 to 49% in comparison with an unfoamed middle layer (3).

## Revendications

1. Tube en plastique multicouche, comprenant :
- une couche intérieure (1) qui comprend une polyoléfine,
- une couche intermédiaire (3) agencée sur la couche intérieure (1) et
- une couche extérieure (2) qui est agencée sur la couche intermédiaire (3) et qui comprend une polyoléfine ;
la couche intermédiaire (3) comprenant 76 à 85 % en poids d'une polyoléfine et 15 à 24 % en poids d'une charge minérale, et étant expansée de manière à ce que la densité de la couche intermédiaire (3) soit réduite de 10 à 70 % en comparaison d'une couche intermédiaire non expansée ;
la polyoléfine étant à chaque fois choisie parmi le polyéthylène, le polypropylène, les copolymères de ces matériaux et/ou une combinaison de ces matériaux ; et
la charge étant choisie parmi le talc, la craie, les fibres de verre et/ou une combinaison de ces matériaux.

2. Tube en plastique selon la revendication précédente, dans lequel la couche intermédiaire (3) comprend 77 à 81 % en poids de polyoléfine et 19 à 23 % en poids de charge.

3. Tube en plastique selon la revendication précédente, dans lequel la couche intermédiaire (3) comprend 79 % en poids de polyoléfine et 21 % en poids de charge.

4. Tube en plastique selon l'une quelconque des revendications précédentes, dans lequel la couche intérieure (1) et/ou la couche extérieure (2) comprennent une polyoléfine et une charge.

5. Tube en plastique selon l'une quelconque des revendications précédentes, dans lequel la polyoléfine est un polypropylène.

6. Tube en plastique selon l'une quelconque des revendications précédentes, dans lequel la charge est constituée de talc.

7. Tube en plastique selon l'une quelconque des revendications précédentes, dans lequel la densité de la couche intermédiaire (3) est réduite de 10 à 49 % en comparaison d'une couche intermédiaire (3) non expansée.
